# EUROPÄISCHE PATENTSCHRIFT

(11) **EP 1 344 901 B1**
(45) Veröffentlichungstag und Bekanntmachung des Hinweises auf die Patenterteilung: **03.11.2010**
(21) Anmeldenummer: 03003824.4
(22) Anmeldetag: 20.02.2003
(51) Int. Cl.: F01L 9/04, F01L 13/06, F02D 13/06, F02D 17/02

(54) **Steuerung eines Verbrennungsmotors im Schiebebetrieb**
Engine control in deceleration mode
Commande de moteur en phase de décélération

(30) Priorität: 14.03.2002 DE 10211119
(43) Veröffentlichungstag der Anmeldung: 17.09.2003
(73) Patentinhaber: ROBERT BOSCH GMBH, 70442 Stuttgart (DE)
(72) Erfinder: Denz, Helmut, 70184 Stuttgart (DE)

(56) Entgegenhaltungen:
- EP-A- 1 178 201
- GB-A- 2 343 485
- US-A- 4 009 695

## Beschreibung

### Stand der Technik

Die Erfindung betrifft ein Verfahren zur Steuerung der Zündung und des Austausches der Füllung eines Brennraums eines Verbrennungsmotors in Verbindung mit einer Schiebebetriebsphase des Verbrennungsmotors.

Verbrennungsmotoren werden zum Antreiben von Fahrzeugen oder Maschinen, beispielsweise Generatoren, verwendet. Unter Schiebebetrieb versteht man den Betriebszustand des Verbrennungsmotors, in dem er von dem Fahrzeug oder der Maschine angetrieben wird. Bei einem Straßenfahrzeug ist dies typischerweise der Zustand der Verzögerung. Es ist bereits bekannt, die Zufuhr von Kraftstoff zum Verbrennungsmotor in diesem Betriebszustand zu stoppen, um Kraftstoff zu sparen. Mit dem Stoppen der Kraftstoffzufuhr sind unerwünschte Nebenwirkungen verbunden.

Bei einer Einspritzung von Kraftstoff in das den Brennräumen des Verbrennungsmotors vorgelagerte Saugrohr bildet sich an den Saugrohrwänden ein Kraftstoffwandfilm aus. Beim Übergang in den Schiebebetriebszustand mit Kraftstoffabschaltung verdampft der Kraftstoff aus dem Wandfilm und gelangt trotz Abschaltung der Kraftstoffzufuhr in den Brennraum. Wenn die Menge des verdampften Kraftstoffes unter Umständen nicht zur Bildung eines zündfähigen Gemisches ausreicht, gelangt der aus dem Wandfilm verdampfte Kraftstoff unverbrannt in das Abgassystem des Fahrzeugs, was zu unerwünschten HC-Emissionen führt. Analog erfolgt beim Wiedereinsetzen der Kraftstoffzufuhr nach dem Ende des Schiebebetriebs wieder ein Aufbau des Wandfilms im Saugrohr. Der für den Aufbau des Wandfilms notwendige, an den Saugrohrwänden kondensierende Kraftstoff fehlt gewissermaßen bei der Verbrennung im Brennraum, was ebenfalls die Abgasemissionen unerwünscht verschlechtert.

Eine Abschaltung der Kraftstoffzufuhr im Schiebebetrieb hat bei Verbrennungsmotoren mit konventioneller Steuerung der Zufuhr von Kraftstoff/Luft-Gemisch zu den Brennräumen des Verbrennungsmotors sowie der Steuerung des Ausstoßens der verbrannten Restgase den weiteren Nachteil, daß im Schiebebetrieb Luft durch die Brennräume gefördert wird. Dies ist deshalb nachteilig, weil dies zu einer vollständigen Belegung von Sauerstoffspeicherplätzen im nachfolgenden Katalysator führt. Dadurch kann beispielsweise NOx in sauerstoffreichem Abgas zunächst nicht ausreichend konvertiert werden.

Mit Blick auf die Abgasemissionen ist es aus der US 4 009 695 bekannt, bei einem Verbrennungsmotor mit vollvariabler Ventilsteuerung auch die Einlaßventile im Schiebebetrieb geschlossen zu halten. Bei geschlossenen Einlaßventilen werden die Auslaßventile periodisch so angesteuert, daß der Verbrennungsmotor im Schiebebetrieb als Viertakt-Abgas-Kompressor arbeitet. Dadurch soll eine Abbremsung des Fahrzeugs und des Verbrennungsmotors erreicht werden. In diesem Abgas-Kompressorzustand werden Abgase aus dem Abgassystem angesaugt, komprimiert und wieder zurück in das Abgassystem ausgestoßen.

Eine ähnliche Vorgehensweise ist auch der US 6 161 521 zu entnehmen, bei der Einlaßventile und Auslaßventile im Schiebebetrieb so geöffnet und geschlossen werden, daß die Brennraumfüllung gewissermaßen zwischen Saugrohr und Abgassystem hin und her schwingt.

Insgesamt ergeben sich bei einem Verbrennungsmotor mit variabler Ventilhubsteuerung oder bei individuell gesteuerten, elektromagnetischen oder elektrohydraulischen Einlaßventilen und Auslaßventilen neue Möglichkeiten zur Optimierung des Betriebszustands Schiebebetrieb.

Der Erfindung liegt die Aufgabe zugrunde, ein Verfahren der eingangs genannten Art so zu verbessern, daß die Verzögerungszeit bis zum erneuten Aufbau von Drehmoment beim Übergang vom Schiebebetrieb in den Normalbetrieb verringert wird. Ein zusätzlicher Aspekt ist die Abgasemission, die möglichst sowohl beim Übergang in den Schiebebetrieb als auch beim Übergang aus dem Schiebebetrieb in den Normalbetrieb minimiert werden sollte.

Die Aufgabe wird dadurch gelöst, daß der Austausch des Kraftstoff/Luft-Gemisches so gesteuert wird, daß das Kraftstoff/Luft-Gemisch zu Beginn der Schiebebetriebsphase im Brennraum eingeschlossen wird und daß dieses Gemisch am Ende der Schiebebetriebsphase gezündet wird.

### Vorteile der Erfindung

Die Vorteile des Verfahrens liegen darin, daß der Katalysator während der Schiebebetriebsabschaltung nicht mit Luft befüllt wird. Er behält daher seinen Zustand der Sauerstoffbefüllung, der vor dem Schiebebetriebsabschalten herrschte, bei. Im Ergebnis wird das Abgas der ersten Verbrennung nach der Schiebebetriebsabschaltung im Katalysator konvertiert, als wäre eine Schiebebetriebsabschaltung nicht aufgetreten.

Weiter wird der während des Schiebebetriebsabschaltens im Brennraum eingeschlossene Kraftstoff besonders gut aufbereitet', da er unter Umständen mehrfach komprimiert und dekomprimiert wird. Weil auch das eingestellte Kraftstoff/Luft-Verhältnis λ erhalten bleibt, ergibt sich beim Wiedereinsetzen eine hervorragende erste Verbrennung für jeden Zylinder, was sowohl niedrige Kohlenwasserstoffemissionen als auch ein ruckfreies Wiedereinsetzen des Normalbetriebes bewirkt.

Da keine Luft unverbrannt durch die Zylinder gepumpt wird, verändert sich bei einer Saugrohreinspritzung der Wandfilm nur unwesentlich. Er wird lediglich etwas abdampfen und als vorgelagerter Kraftstoffdampf vor dem Einlaßventil stehenbleiben. Somit sind auch für die nächsten regulären Arbeitszyklen beste Bedingungen für niedrige Kohlenwasserstoffemissionen gegeben. Auf Gemischkorrekturmaßnahmen für das Wiedereinsetzen kann daher verzichtet werden.

Da nach dem Auftreten der Bedingungen für das Wiedereinsetzen nicht zuerst verbrannte Gase ausgeschoben werden müssen und neues Gemisch angesaugt werden muß, sondern das eingeschlossene Gemisch direkt gezündet werden kann, erfolgt das Wiedereinsetzen mit nur geringer Verzögerung. Eine stetige Aufsteuerung des Drehmoments ist im Ablauf der ersten Zündfolge, bei der die Füllung konstant ist, durch Variation des Zündwinkels möglich.

Eine Ausgestaltung der Erfindung sieht vor, daß der Austausch der Füllung des Brennraumes über wenigstens ein Einlaßventil und wenigstens'ein Auslaßventil gesteuert wird.

Eine weitere Maßnahme sieht vor, daß der Brennraum zu Beginn der Schiebebetriebsphase über das geöffnete Einlaßventil befüllt wird und daß das Einlaßventil und das Auslaßventil des Brennraums anschließend im geschlossenen Zustand gehalten werden.

Eine weitere Maßnahme zeichnet sich dadurch aus, daß für die letzte Füllung des Brennraumes vor dem Beginn des geschlossenen Zustandes des Einlaßventils und des Auslaßventils noch eine Kraftstoffzumessung erfolgt.

Gemäß einer weiteren Ausgestaltung wird die letzte Füllung des Brennraums so gesteuert, daß sie einen vorbestimmten Schwellenwert unterschreitet.

Gemäß einer weiteren Ausgestaltung erfolgt das Verfahren bei einem Motor mit mehreren Brennräumen nach einer vorgebbaren Ausblendfolge.

Eine weitere Ausgestaltung sieht vor, daß am Ende der Schiebebetriebsphase die Füllung wenigstens eines Brennraums gezündet wird und daß nach der Verbrennung der Brennraumfüllung das Auslaßventil dieses Brennraumes geöffnet wird.

Eine weitere Ausgestaltung sieht vor, daß anschließend die Füllung weiterer Brennräume des Verbrennungsmotors sukzessive gemäß einer Zündfolge gezündet wird.

Eine weitere Ausgestaltung sieht vor, daß anschließend die Füllung weiterer Brennräume gemäß einer vorgebbaren Wiedereinsetzfolge erfolgt.

Eine weitere Ausgestaltung zeichnet sich dadurch aus, dass im Fall, dass während eines Schiebebetriebszustands erkannt wird, daß der Motor abgestellt werden soll, das in den Zylindern eingeschlossene Gemisch verbrannt wird und die Zylinder mit Frischluft gefüllt werden bis zum Motorstillstand.

Gemäß einer weiteren Ausgestaltung wird das Verfahren angewendet bei einem Verbrennungsmotor mit mehreren Brennräumen sukzessive für alle Brennräume in der durch die Zündfolge vorgegebenen Reihenfolge.

Die Erfindung richtet sich auch auf eine Steuereinrichtung zur Durchführung der genannten Verfahren, Maßnahmen und Ausgestaltungen sowie auf einen Verbrennungsmotor, der sich durch eine variable Steuerung der Ventile auszeichnet, die ein Halten der Einlaßventile und Auslaßventile im geschlossenen Zustand erlaubt. Zusätzlich weist ein solcher Verbrennungsmotor eine Steuereinrichtung zur Durchführung wenigstens eines der oben genannten Verfahren wenigstens eine der Maßnahmen oder der Ausgestaltungen auf.

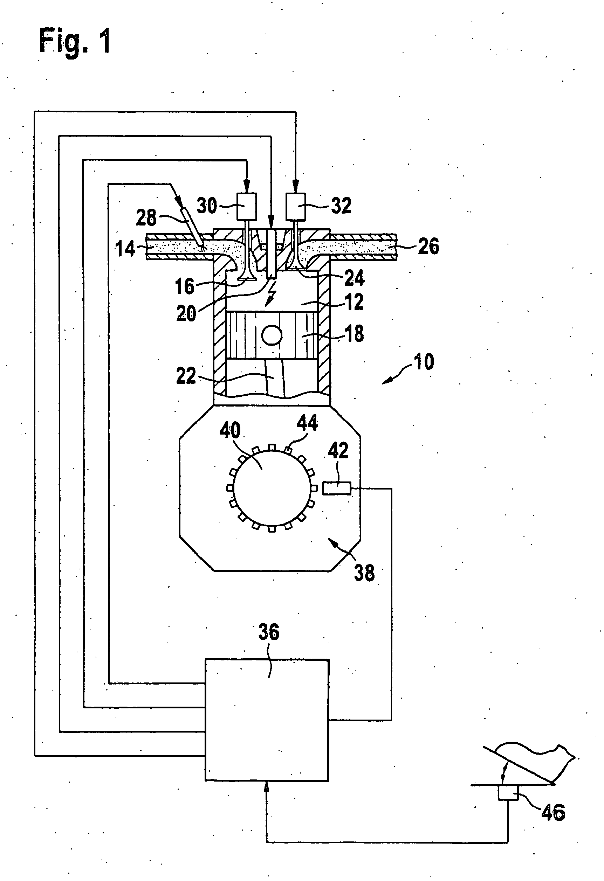

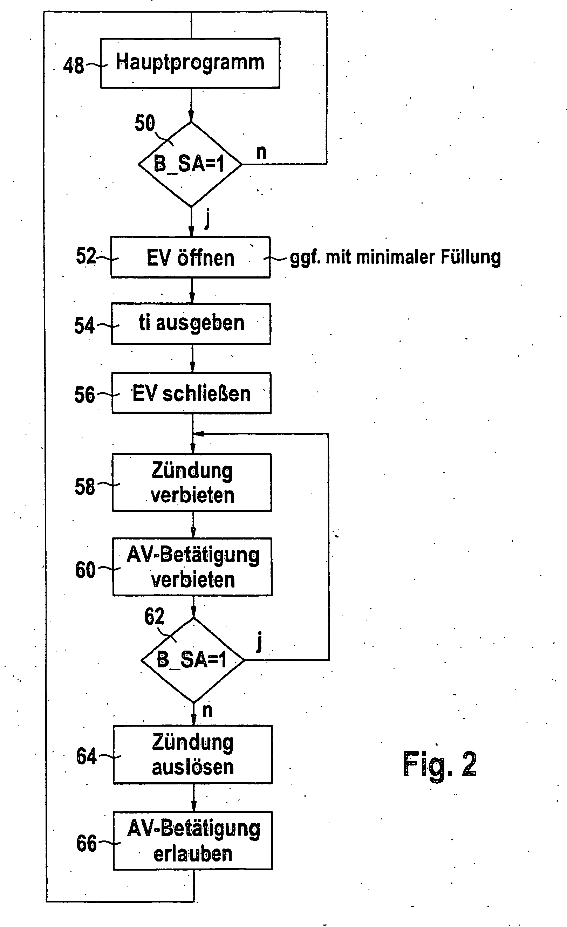

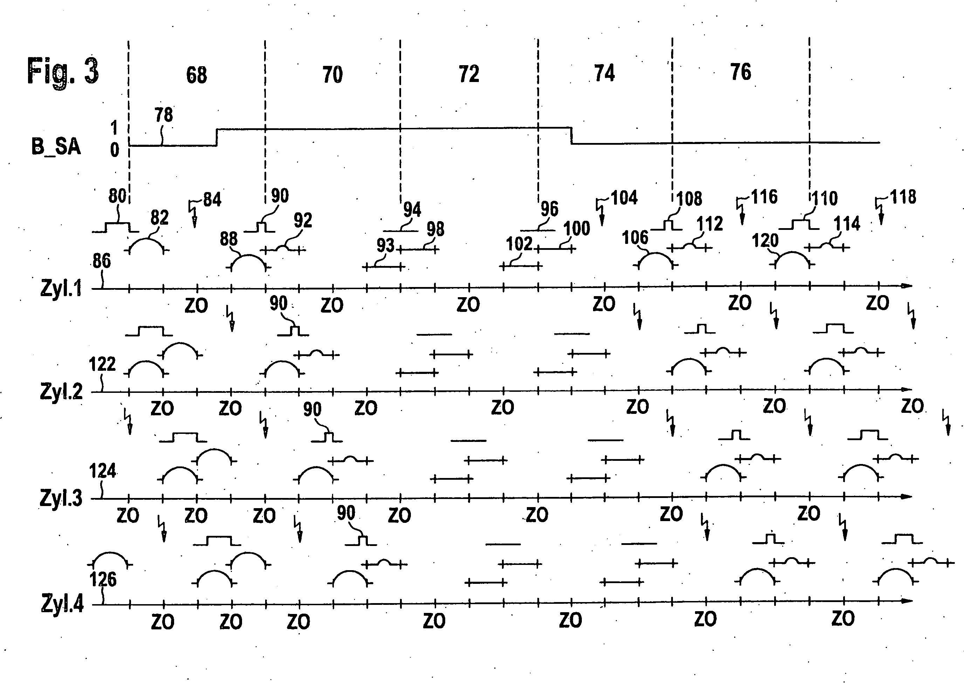

Im folgenden werden Ausführungsbeispiele der Erfindung mit Bezug auf die beiliegenden Figuren erläutert. Im einzelnen zeigt Figur 1 das technische Umfeld der Erfindung. Figur 2 stellt ein Ausführungsbeispiel des erfindungsgemäßen Verfahrens in der Form eines Flußdiagramms dar, und Figur 3 zeigt zeitliche Verläufe verschiedener Betriebsgrößen des Verbrennungsmotors beim Übergang vom Normalbetrieb in den Schiebebetrieb und zurück in den Normalbetrieb. Die Ziffer 10 in der Figur 1 bezeichnet einen Verbrennungsmotor mit einem Brennraum 12, der aus einem Saugrohr 14 über ein Einlaßventil 16 mit Kraftstoff/Luft-Gemisch gefüllt wird. Der Brennraum 12 wird durch einen Kolben 18, der das eingeschlossene Kraftstoff/Luft-Gemisch in seiner Aufwärtsbewegung verdichtet, beweglich abgedichtet. Das Kraftstoff/Luft-Gemisch wird durch eine Zündkerze 20 entzündet. Die bei der Verbrennung entstehende Kraft führt über eine Abwärtsbewegung des Kolbens 18 und über einen Kurbeltrieb 22 zu einer Drehbewegung einer Kurbelwelle zum Antreiben eines Fahrzeugs oder einer Maschine. Nach der Verbrennung und Expansion wird das verbrannte Restgas durch den sich wieder aufwärts bewegenden Kolben 18 über ein Auslaßventil 24 in ein Abgassystem 26 ausgestoßen. Im dargestellten Beispiel wird der Kraftstoff über ein Einspritzventil 28 in das Saugrohr 14 zugemessen. Diese Darstellung entspricht einer sogenannten Saugrohreinspritzung.

Die Erfindung ist nicht auf eine Anwendung bei einem Verbrennungsmotor mit Saugrohreinspritzung beschränkt, sondern sie kann analog bei einem Verbrennungsmotor mit Benzindirekteinspritzung verwendet werden. In diesem Fall wäre das Einspritzventil 28 so anzuordnen, daß es direkt in den Brennraum 12 einspritzt. Ein Einlaßventilsteller 30 betätigt das Einlaßventil 16 und ein Auslaßventilsteller 32 betätigt das Auslaßventil 24. Einspritzventil 28, Einlaßventilsteller 30, Auslaßventilsteller 32 und Zündkerze 20 werden jeweils von einer Steuereinrichtung 36 angesteuert.

Dazu verarbeitet die Steuereinrichtung 36 verschiedene Betriebsgrößen des Verbrennungsmotors. Eine wesentliche Betriebskenngröße ist beispielsweise die Winkelstellung des Kurbeltriebs 22, die die Position des Kolbens 18 bestimmt. Diese Winkelstellung wird durch eine Winkelsensorik 38 erfaßt, die dazu ein mit dem Kurbeltrieb 22 drehfest verbundenes Geberrad 40 besitzt, dessen ferromagnetische Markierungen 44 ein elektrisches Signal im Induktivsensor 42-erzeugen. Eine weitere wesentliche Betriebskenngröße des Verbrennungsmotors stellt das gewünschte oder geforderte Drehmoment dar. Zur Erfassung des geforderten Momentes ist ein Fahrpedalsensor 46 vorgesehen. Die Signale der Winkelsensorik 38 und des Fahrpedalsensors 46 werden in der Steuereinrichtung 36 durch entsprechende Programme und gespeicherte Daten zu Ansteuersignalen für die Zündkerze 20, das Einspritzventil 28, den Einlaßventilsteller 30 und den Auslaßventilsteller 32 verarbeitet. Wird wenig Drehmoment gefordert, so wird der Einlaßventilsteller 30 derart angesteuert, daß das Einlaßventil 16 nur mit geringem Hub und/oder für kurze Zeit öffnet, was zu einer vergleichsweise kleinen Brennraumfüllung führt. Bei einem höheren angeforderten Drehmoment wird das Einlaßventil 16 entsprechend mit einem größeren Hub und/oder für eine längere Zeit geöffnet, um eine größere Brennraumfüllung zu erzeugen. Auf diese Art und Weise läßt sich bekanntlich eine sogenannte drosselfreie Laststeuerung realisieren. Die Relation der Öffnung der Einlaßventile 16 und Auslaßventile 24 zu der Position des Kolbens 18 ergibt sich durch entsprechende Verarbeitung der Signale des Induktivsensors 42, deren Periodizität ein Abbild des Vorbeistreichens der ferromagnetischen Markierungen am Induktivsensor 42 darstellt, in der Steuereinrichtung 36.

Figur 2 stellt ein Ausführungsbeispiel des erfindungsgemäßen Verfahrens in der Form eines Flußdiagramms dar. Block 1 repräsentiert ein übergeordnetes Hauptprogramm zur Steuerung des Verbrennungsmotors, d.h. zur Ansteuerung des Einspritzventils 28, der Zündkerze 20, des Einlaßventilstellers 30 und des Auslaßventilstellers 32. Im dargestellten Beispiel wird in einem Abfrageschritt 50, der aus dem Hauptprogramm 48 erreicht wird, geprüft, ob Schiebebetrieb vorliegt. Schiebebetrieb liegt dann vor, wenn eine Variable B_SA den Wert 1 besitzt. Liegt kein Schiebebetrieb vor, besitzt diese Variable den Wert 0. Die Steuereinrichtung 36 kann den Wert der Variablen B_SA beispielsweise in Abhängigkeit von dem Signal des Fahrpedalsensors 46 setzen. Liegt kein Schiebebetrieb vor, wird wieder zurück in das Hauptprogramm 48 verzweigt. Andernfalls erfolgt in Block 52 ein Öffnen des Einlaßventils zur Einstellung einer vorbestimmten Brennraumfüllung. Dieses Einstellen einer einen vorbestimmten Schwellenwert unterschreitenden Füllung dient dazu, eine sprungartige Drehmomentänderung beim Übergang in den Schiebebetrieb zu verhindern.

Gegebenenfalls kann eine solche minimale Füllung auch über einen Zeitraum von 2 bis 5 Arbeitszyklen des Verbrennungsmotors, d.h. von bis zu ca. 10 Umdrehungen der Kurbelwelle, eingestellt werden. Eine solche Drosselung der Leistung von zu deaktivierenden Zylindern ist in der DE 101 48 347 der gleichen Anmelderin offenbart. So weit wie diese sukzessive Leistungs/Drehmomentverminderung dem Deaktivieren des Zylinders bzw. des Brennraums vorangeht, soll diese Schrift in die vorliegende Offenbarung mit einbezogen sein.

In Block 54 erfolgt die Ausgabe einer Einspritzimpulsbreite ti, mit der die Steuereinrichtung 36 das Einspritzventil 28 ansteuert. Diese Ansteuerung des Einspritzventils 28 erfolgt hier vor dem Schließen des Einlaßventils 56. Die Einspritzung von Kraftstoff muß jedoch nicht zwangsläufig bei geöffnetem Einlaßventil 16 erfolgen. Sie kann beispielsweise auch vor dem Öffnen des Einlaßventils im Block 52 erfolgen. In diesem Fall wird der Kraftstoff gewissermaßen dem noch geschlossenen Einlaßventil 16 vorgelagert. Bei einer Benzindirekteinspritzung kann die Einspritzung auch ganz oder teilweise im Verdichtungstakt erfolgen. Wesentlich im Zusammenhang mit der vorliegenden Erfindung ist das Verbot der Zündung im Block 58 und das Verbot der Auslaßventilbetätigung im Block 60. Durch die Schritte 52 bis 60 wird damit ein brennfähiges Gemisch im Brennraum eingeschlossen. Das Gemisch wird solange eingeschlossen, wie Schiebebetrieb vorliegt. Diese Funktion wird durch den Block 62 gewährleistet. Im Block 62 wird wieder abgefragt, ob die Variable B_SA den Wert 1 besitzt. Wenn dies der Fall ist, befindet sich der Verbrennungsmotor weiter im Schiebebetrieb, und es werden weiter die Zündungen und auch die Betätigungen des Auslaßventils verboten. Diese Funktion wird durch die Verzweigung von Block 62 vor den Block 58 realisiert. Wird der Schiebebetrieb dagegen beendet, wird die Abfrage im Block 62 verneint, und es erfolgt in Block 64 eine Auslösung der Zündung des im Brennraum 12 eingeschlossenen Kraftstoff/Luft-Gemisches und in Block 66 wird die Betätigung des Auslaßventils 24 wieder erlaubt. Das Ende des Schiebebetriebs kann beispielsweise durch ein Signal des Fahrpedalsensors 46 ausgelöst werden, das eine steigende Drehmomentanforderung repräsentiert.

Figur 3 zeigt den Verlauf verschiedener Signale und Größen über dem Drehwinkel der Kurbelwelle, was bei gleichbleibender Kurbelwellendrehzahl einer Darstellung über der Zeit äquivalent ist. Dabei lassen sich fünf Abschnitte 68, 70, 72, 74 und 76 unterscheiden. Die Linie 78 zeigt den Verlauf des Wertes der Variablen B_SA. Innerhalb des ersten Abschnitts 68 wird Schiebebetrieb angefordert, was durch den Wechsel des Wertes der Variablen B_SA von 0 auf 1 angezeigt wird. Die Ziffer 80 bezeichnet eine Einspritzimpulsbreite des ersten Zylinders vor der Anforderung des Schiebebetriebs. Die Ziffer 82 repräsentiert den Verlauf des Ventilhubes des Einlaßventils 16 außerhalb des Schiebebetriebs. Der Pfeil 84 stellt die Auslösung der Zündung etwa beim Zünd-OT (ZO) dar. Auf der Achse 86 sind jeweils die Zünd-OT des ersten Zylinders eingetragen. Die Strecken zwischen zwei benachbarten Zünd-OT sind in jeweils vier Abschnitte eingeteilt, entsprechend den vier Takten Verbrennen, Ausstoßen, Ansaugen, Verdichten. Nach dem Wechseln des Wertes der Variablen B_SA von 0 auf 1 wird das Auslaßventil des Zylinders 1 mit der Ventilerhebungskurve 88 noch einmal geöffnet, um die vor der Anforderung des Schiebebetriebs verbrannte Brennraumfüllung auszustoßen. Die Ziffer 92 bezeichnet die Ventilerhebungskurve des Einlaßventils 16 nach der Anforderung des Schiebebetriebs. Die Kurve 92 fällt flacher und kürzer aus als die vorhergehende Kurve 82, um die Brennraumfüllung auf einen minimalen Wert zu beschränken. Entsprechend wird die Einspritzimpulsbreite ti verkleinert. Die Einspritzimpulsbreite ti wird durch die Kurve 90 repräsentiert, die ersichtlich kleiner ist als die vorhergehende Einspritzimpulsbreite 80. Das durch die Kurven 92 und 90 gebildete Gemisch wird im Brennraum eingeschlossen. Dies ergibt sich aus der Kurve 93, deren gerader Verlauf ein geschlossenes Auslaßventil 24 repräsentiert. Es ist zu beachten, daß das eingeschlossene Gemisch jetzt nicht gezündet wird. Die Ziffern 94 und 96 repräsentieren ausgebliebene Einspritzimpulsbreiten im Schiebebetrieb. Analog repräsentieren die Ziffern 98 und 100 geschlossen gehaltene Einlaßventile 16 im Schiebebetrieb und die Ziffer 102 repräsentiert geschlossen gehaltene Auslaßventile 24 im Schiebebetrieb.

Im vierten Abschnitt 74 erfolgt dann eine Zündung des eingeschlossenen Gemisches (Pfeil 104) und ein Ausstoßen des verbrannten Restgases über ein geöffnetes Auslaßventil. Dies wird durch die Kurve 106 dargestellt. Auch die Einspritzungen setzen wieder ein, zunächst mit einer kleinen Impulsbreite (Ziffer 108) und dann wieder mit größeren Impulsbreiten (Ziffer 110). Entsprechend werden auch die Einlaßventile 16 wieder mit größer werdenden Öffnungsimpulsbreiten 112, 114 angesteuert. Weiterhin erfolgen wieder reguläre Zündungen 116, 118 und auch das Auslaßventil 24 wird wieder periodisch geöffnet (Ziffer 120). Unterhalb der Geraden 86, die dem Zylinder 1 zugeordnet ist, sind noch Geraden 122, 124 und 126 dargestellt, die den Zylindern 2, 3 und 4 eines Vierzylindermotors zugeordnet sind. Die Reihenfolge der Zylinder 1 bis 4 bezeichnet hier die in der Zündfolge aufeinanderfolgenden Zylinder.

Aufgrund der bei einem Vierzylindermotor um 180° versetzten Zündung der einzelnen Zylinder ergibt sich bei den Zylindern 2, 3 und 4 ein etwas anderer zeitlicher Verlauf der Signale der Einspritzzeiten, der Zündungen und der Öffnungskurven der Einlaß- und Auslaßventile. Die Verkleinerung der Einspritzimpulsbreite, die beim ersten Zylinder mit der Ziffer 90 bezeichnet wurde, findet bei den Zylindern 2, 3 und 4 zu einem späteren Zeitpunkt statt. Um die Zuordnung zu erleichtern, sind die ersten nach der Anforderung des Schiebebetriebs auftretenden verkleinerten Einspritzzeiten auch bei den Zylindern 2, 3 und 4 mit der Ziffer 90 bezeichnet. Analog würden sich die Bezeichnungen der übrigen Kurven über der dem Zylinder 1 zugeordneten Geraden 86 auf die den Geraden 122, 124 und 126 zugeordneten Kurven übertragen lassen. Aus der Darstellung ergibt sich der Hintergrund der Unterteilung des ganzen Vorgangs in fünf Abschnitte 68, 70, 72, 74 und 76. Während des Abschnitts 68 wurde Schiebebetrieb angefordert. In der Phase 70 wurden die nächsten Einspritzzeiten und Brennraumfüllungen reduziert. In der Phase 72 sind alle Ventile geschlossen, und es finden weder Einspritzungen noch Zündungen statt. In der Phase 74 wird der Schiebebetrieb beendet. Die Zündungen des in den Brennräumen der Zylinder 1 bis 4 eingeschlossenen Kraftstoff/Luft-Gemisches beginnt. In der Phase 76 findet eine sukzessive Vergrößerung der Füllung statt. Weiter rechts von der Phase 76 ist der Übergang vom Schiebebetrieb in den Normalbetrieb abgeschlossen.

Wesentliche Elemente der Erfindung sind damit, daß im Schiebebetrieb in jedem Zylinder noch eine brennfähige Füllung erzeugt wird, daß im Schiebebetrieb keine Luft unverbrannt durch die Brennräume geschoben wird und daß nach dem Ende des ungezündeten Schiebebetriebszustandes durch Zündung ohne vorhergehenden Ansaugvorgang sofort wieder eine Verbrennung mit Drehmomentaufbau erfolgen kann. Dabei wird von einer Füllungssteuerung ohne Drosselklappe alleine über die Einlaßventile ausgegangen.

Alternativ zum beschriebenen Verfahren, daß beim Einleiten des Schiebebetriebabschaltens sukzessive in Folge alle Zylinder in den abgeschalteten Betrieb und nach dem Wiedereinsetzen ebenfalls sukzessive in Folge wieder befeuert werden, kann das Ab- und Wiederzuschalten auch so erfolgen, daß zunächst nur jeder zweite Zylinder ab und wieder zugeschaltet wird und erst beim zweiten Arbeitsspiel jeweils die volle Zylinderzahl ab- bzw. wieder zugeschaltet wird. Dies führt zu einem stetigeren und ruckarmen Übergang in das volle Bremsmoment bzw. aus diesem zurück in das niedrigste Moment bei minimaler Füllung. Alternativ kann die Ausblend- und Wiedereinsetzfolge auch über eine Momentenvergabe in Verbindung mit Zündwinkelspätziehung berechnet werden.

Wird bei einem Schiebebetriebszustand aus erkannt, daß der Motor abgestellt werden soll, wird entweder kein Gemisch mehr im Brennraum eingeschlossen oder eingeschlossenes Gemisch verbrannt und die Zylinder mit Frischluft gespült bis zum Motorstillstand, damit bei abgestelltem Motor keine HC-Emissionen austreten können.

Im einzelnen erfolgt die Ablaufsteuerung folgendermaßen: Nach Vorliegen der Bedingungen für das Schiebebetriebsabschalten wird in jedem Zylinder nach Ablauf der letzten Verbrennung das Auslaßventil noch für den zugehörigen Auslaßvorgang angesteuert' und dann nicht mehr betätigt. Ferner wird in einem Übergangszyklus die Einspritzung noch entsprechend einer minimalen Füllung durchgeführt und das Einlaßventil noch so weit geöffnet, daß sich die zugehörige minimale Füllung ergibt. Nach dem Schließen des Einlaßventils wird das eingeschlossene Gemisch nicht gezündet und das Auslaßventil nicht mehr geöffnet. Ab jetzt bleiben die Einlaßventile und die Auslaßventile geschlossen, und es unterbleibt auch die Einspritzung und Zündung des eingeschlossenen Gemisches bis der Schiebebetriebszustand beendet werden soll. Das Wiedereinsetzen, d.h. der Übergang vom Schiebebetriebszustand in den Normalbetrieb, wird durch einen Übergangszyklus in jedem Zylinder eingeleitet, in dem keine Einlaßventilansteuerung erfolgt, sondern in dem direkt das eingeschlossene Gemisch gezündet und anschließend das Auslaßventil geöffnet wird. Ab dann folgen wieder normale Arbeitszyklen mit regulärer Öffnung der Einlaß- und Auslaßventile.

Aus Fahrverhaltensgründen, um eine ruckartige Momentenreduzierung zu verhindern, oder bei einer elektromechanischen Ventilhubverstellung, bei der die Verstellmechanik keine schlagartige Veränderung der Einlaßerhebung ermöglicht, kann auch folgendes Einleiten der Schiebebetriebsabschaltung sinnvoll sein: Nach Vorliegen der Bedingungen für Schiebebetriebsabschalten wird die Luftzufuhr zunächst durch stetige Verringerung der Einlaßerhebung unter Beibehaltung der Zündung und Einspritzung soweit reduziert, bis sich eine Füllung nahe der minimalen Füllung ergibt. Erst dann wird das oben beschriebene Schiebebetriebsabschalten eingeleitet.

## Patentansprüche

1. Verfahren zur Steuerung der Zündung und des Austausches der Füllung eines Brennraums eines Verbrennungsmotors mit Kraftstoff/Luft-Gemisch in Verbindung mit einer Schiebebetriebsphase des Verbrennungsmotors, **dadurch gekennzeichnet, daß** der Austausch des Kraftstoff/Luft-Gemisches so gesteuert wird, daß das Kraftstoff/Luft-Gemisch zu Beginn der Schiebebetriebsphase im Brennraum eingeschlossen wird und daß dieses Gemisch am Ende der Schiebebetriebsphase gezündet wird.

2. Verfahren nach Anspruch 1, **dadurch gekennzeichnet, daß** der Austausch der Füllung des Brennraums über wenigstens ein Einlaßventil und wenigstens ein Auslaßventil gesteuert wird.

3. Verfahren nach Anspruch 2, **dadurch gekennzeichnet, daß** der Brennraum zu Beginn der Schiebebetriebsphase über das geöffnete Einlaßventil befüllt wird.und daß das Einlaßventil und das Auslaßventil anschließend im geschlossenen Zustand gehalten werden.

4. Verfahren nach Anspruch 3, **dadurch gekennzeichnet, daß** für die letzte Füllung des Brennraumes vor dem Beginn des geschlossenen Zustandes des Einlaßventils und des Auslaßventils noch eine Kraftstoffzumessung erfolgt.

5. Verfahren nach Anspruch 3 oder 4, **dadurch gekennzeichnet, daß** die letzte Füllung des Brennraums so gesteuert wird, daß sie einen vorbestimmten Schwellenwert unterschreitet.

6. Verfahren nach einem der Ansprüche 1 bis 5, **dadurch gekennzeichnet, daß** das Verfahren bei einem Verbrennungsmotor mit mehreren Brennräumen sukzessive für alle Brennräume erfolgt.

7. Verfahren nach einem der Ansprüche 1 bis 6, **dadurch gekennzeichnet, daß** das Verfahren bei einem Motor mit mehreren Brennräumen nach einer vorgebbaren Ausblendfolge erfolgt.

8. Verfahren nach einem der Anspruch 2 bis 6, **dadurch** gekenntzeichnet, daß am Ende der Schiebebetriebsphase die Füllung wenigstens eines Brennraums gezündet wird und daß nach der Verbrennung der Brennraumfüllung das Auslaßventil dieses Brennraumes geöffnet wird.

9. Verfahren nach Anspruch 7, **dadurch gekennzeichnet, daß** anschließend die Füllung weiterer Brennräume des Verbrennungsmotors sukzessive gemäß einer Zündfolge gezündet wird.

10. Verfahren nach Anspruch 7, **dadurch gekennzeichnet, daß** anschließend die Füllung weiterer Brennräume gemäß einer vorgebbaren Wiedereinsetzfolge erfolg.

11. Verfahren nach einem der Ansprüche 1 bis 10, **dadurch gekennzeichnet, dass** bei einem Erkennen des Abschaltens der Brennkraftmaschine das in den Zylindern eingeschlossene Gemisch verbrannt wird und anschließend die Zylinder mit Frischluft gefüllt werden.

12. Steuereinrichtung zur Durchführung wenigstens eines der Verfahren nach den Ansprüchen 1 bis 11.

13. Verbrennungsmotor mit einer variablen Steuerung seiner Einlaßventile und Auslaßventile, welche Steuerung ein Halten der Einlaßventile und Auslaßventile im geschlossenen Zustand erlaubt und mit einer Steuereinrichtung zur Durchführung wenigstens eines der Verfahren nach den Ansprüchen 1 bis 11.

## Claims

1. Method for controlling the ignition and the exchange of the charge of a combustion chamber of an internal combustion engine with fuel/air mixture in connection with an overrun operating phase of the internal combustion engine, **characterized in that** the exchange of the fuel/air mixture is controlled such that the fuel/air mixture is enclosed in the combustion chamber at the start of the overrun operating phase and **in that** said mixture is ignited at the end of the overrun operating phase.

2. Method according to Claim 1, **characterized in that** the exchange of the charge of the combustion chamber is controlled by means of at least one inlet valve and at least one outlet valve.

3. Method according to Claim 2, **characterized in that** the combustion chamber is charged via the open inlet valve at the start of the overrun operating phase and **in that** the inlet valve and the outlet valve are subsequently held in the closed state.

4. Method according to Claim 3, **characterized in that**, for the final charge of the combustion chamber, another metering of fuel takes place before the start of the closed state of the inlet valve and of the outlet valve.

5. Method according to Claim 3 or 4, **characterized in that** the final charge of the combustion chamber is controlled such that it undershoots a predetermined threshold value.

6. Method according to one of Claims 1 to 5, **characterized in that**, in the case of an internal combustion engine having a plurality of combustion chambers, the method is carried out successively for all of the combustion chambers.

7. Method according to one of Claims 1 to 6, **characterized in that**, in the case of an engine having a plurality of combustion chambers, the method is carried out according to a predefinable blank-out sequence.

8. Method according to one of Claims 2 to 6, **characterized in that**, at the end of the overrun operating phase, the charge of at least one combustion chamber is ignited, and **in that**, after the combustion of the combustion chamber charge, the outlet valve of said combustion chamber is opened.

9. Method according to Claim 7, **characterized in that**, subsequently, the charges of further combustion chambers of the internal combustion engine are ignited successively according to an ignition sequence.

10. Method according to Claim 7, **characterized in that**, subsequently, the charging of further combustion chambers takes place according to a predefinable fuel feed restart sequence.

11. Method according to one of Claims 1 to 10, **characterized in that**, in the event of the shut-down of the internal combustion engine being detected, the mixture enclosed in the cylinders is burned and the cylinders are subsequently filled with fresh charge.

12. Control device for carrying out at least one of the methods according to Claims 1 to 11.

13. Internal combustion engine having variable control of its inlet and outlet valves, which control allows the inlet valves and outlet valves to be held in the closed state, and having a control device for carrying out at least one of the methods according to Claims 1 to 11.

## Revendications

1. Procédé pour commander l'allumage et l'échange du remplissage d'une chambre de combustion d'un moteur à combustion interne avec un mélange air/combustible en association avec une phase en mode de poussée du moteur à combustion interne, **caractérisé en ce que** l'échange du mélange air/combustible est commandé de telle sorte que le mélange air/combustible au début de la phase en mode de poussée soit inclus dans la chambre de combustion et que ce mélange soit allumé à la fin de la phase en mode de poussée.

2. Procédé selon la revendication 1, **caractérisé en ce que** l'échange du remplissage de la chambre de combustion est commandé par le biais d'au moins une soupape d'admission et au moins une soupape d'échappement.

3. Procédé selon la revendication 2, **caractérisé en ce que** la chambre de combustion au début de la phase en mode de poussée est remplie par le biais de la soupape d'admission ouverte et **en ce que** la soupape d'admission et la soupape d'échappement sont ensuite maintenues dans l'état fermé.

4. Procédé selon la revendication 3, **caractérisé en ce que** pour le dernier remplissage de la chambre de combustion avant le début de l'état fermé de la soupape d'admission et de la soupape d'échappement, il se produit encore un dosage de combustible.

5. Procédé selon la revendication 3 ou 4, **caractérisé en ce que** le dernier remplissage de la chambre de combustion est commandé de telle sorte qu'il soit en dessous d'une valeur seuil prédéterminée.

6. Procédé selon l'une quelconque des revendications 1 à 5, **caractérisé en ce que** le procédé a lieu dans le cas d'un moteur à combustion interne avec plusieurs chambres de combustion de manière successive pour toutes les chambres de combustion.

7. Procédé selon l'une quelconque des revendications 1 à 6, **caractérisé en ce que** le procédé a lieu dans le cas d'un moteur avec plusieurs chambres de combustion après une séquence de suppression prédéfinissable.

8. Procédé selon l'une quelconque des revendications 2 à 6, **caractérisé en ce qu'**à la fin de la phase en mode de poussée, le remplissage d'au moins une chambre de combustion est allumé, et **en ce qu'**après la combustion du remplissage de la chambre de combustion, la soupape d'échappement de cette chambre de combustion est ouverte.

9. Procédé selon la revendication 7, **caractérisé en ce qu'**ensuite le remplissage d'autres chambres de combustion du moteur à combustion interne est allumé successivement suivant une séquence d'allumage.

10. Procédé selon la revendication 7, **caractérisé en ce qu'**ensuite le remplissage d'autres chambres de combustion a lieu suivant une séquence de réinitialisation prédéfinissable.

11. Procédé selon l'une quelconque des revendications 1 à 10, **caractérisé en ce que** dans le cas d'une reconnaissance de la coupure du moteur à combustion interne, le mélange inclus dans les cylindres est brûlé et ensuite les cylindres sont remplis d'air frais.

12. Dispositif de commande pour la mise en oeuvre d'au moins l'un des procédés selon les revendications 1 à 11.

13. Moteur à combustion interne comprenant une commande variable de ses soupapes d'admission et d'échappement, laquelle commande permet de maintenir les soupapes d'admission et d'échappement dans l'état fermé et comprenant un dispositif de commande pour mettre en oeuvre au moins l'un des procédés selon les revendications 1 à 11.
